# EUROPEAN PATENT SPECIFICATION

(11) **EP 1 281 259 B1**
(45) Date of publication and mention of the grant of the patent: **14.07.2004**
(21) Application number: 00934989.5
(22) Date of filing: 06.05.2000
(51) Int. Cl.: H04L 12/56, H04Q 11/04

(54) **SYSTEM FOR ENHANCED RESOURCE MANAGEMENT FOR CONNECTIONS OF AN ATM-NETWORK**
SYSTEM ZUM VERBESSERTEN RESSOURCENMANAGEMENT FÜR ATM-NETZ-VERBINDUNGEN
SYSTEME D'AMELIORATION DE GESTION DES RESSOURCES DE CONNEXIONS DANS UN RESEAU MTA

(43) Date of publication of application: 05.02.2003
(73) Proprietor: Nokia Corporation, 02150 Espoo (FI)
(72) Inventor: AALTO, Mika, FI-02660 Espoo (FI); CAPITAN CUADRADO, Faustino, ES-28035 Madrid (ES)
(74) Representative: COHAUSZ & FLORACK
(86) International application number: PCT/EP2000/004076
(87) International publication number: WO 2001/086884

(56) References cited:
- EP-A- 0 915 634
- WO-A-98/29984

## Description

The invention comprises a system for enhanced resource management for connections of an ATM-network comprising means for setting up at least two first connections between two ATM-nodes and for reserving network resources for said at least two first connections, means for setting up a plurality of second connections within said at least two first connections where said first connections provide sufficient network resources for each second connection, respectively, and means for grouping said first connections together into one common channel group and for reserving network resources jointly for said channel group.

In today's ATM-networks, connections are set up between two ATM-nodes, and such data communication is made possible. Between ATM-layers of two ATM-nodes, ATM-virtual-channel-connections (ATM-VCC) and ATM-virtual-path-connections (ATM-VPC) can be set up. These ATM-connections are used by an ATM-adaptation-layer (AAL) of the ATM-node to set up ATM-adaptation-layer (AAL) connections. The ATM-adaptation-layer (AAL) connections use dedicated ATM-connections, which means that only the data of one ATM-adaptation-layer can be carried within one ATM-connection. The ATM-adaptation-layer (AAL) generates data units, which are send via these AAL-connections to the ATM-adaptation-layer (AAL) of the destination ATM-node. To communicate via an ATM-connection, the ATM-adaptation-layer (AAL) requires system resources such as quality of service parameters and bandwidth. These system resources are provided by an ATM-connection (ATM-VC, ATM-VPC), which already has been set up between two ATM-nodes. During set up of an ATM-connection (ATM-VCC, ATM-VPC), the system resources being available are checked by an ATM-connection-admission-control (ATM-CAC). In case, enough system resources are available, the requested resources will be reserved and the ATM-connection is established. The reservation is achieved by a traffic contract. The traffic contract can, for instance, reserve a constant bitrate (CBR) from the network. The ATM-adaptation-layer (AAL) may provide additonal multiplexing for multiple connections per ATM-virtual-channel-connection (ATM-VCC). If the ATM-adaptation-layer (AAL) does not provide any multiplexing, there is one-to-one mapping between the ATM-adaptation-layer connection and ATM-virtual-channel-connection (ATM-VCC). In that case there is no need for separate ATM-adaptation-layer-connection setup and an ATM-connection-admission-control (AAL-CAC). If the ATM-adaptation-layer (AAL) provides multiplexing for multiple AAL-connections, then there must be a separate procedure to setup the AAL-connections. In addition to that the AAL-connections may reserve resources in a same way as ATM-connections. Then an AAL-CAC function is needed. During an ATM-adaptation-layer (AAL) connection set up, an AAL-connection-admission-control (AAL-CAC) checks whether an ATM-virtual-channel-connection has been established to the destination node that can provide the requested system resources. In case one or more ATM-virtual-channel-connections (ATM-VCC) have been set up between the origin and the destination node, the AAL-connection-admission-control (AAL-CAC) checks whether any of the established ATM-virtual-channel-connections (ATM-VCC) has enough capacity to carry the AAL-connection.

For each of these ATM-virtual-channel-connections (ATM-VCC), one traffic contract (ATM-CAC) defines the reserved system resources, respectively.

Each ATM-virtual-channel-connection (ATM-VCC) can carry up to 248 ATM-adaptation-layer (AAL) connections. To carry more than 248 ATM-adaptation-layer (AAL) connections between two ATM-nodes, multiple ATM-virtual-channel-connections (ATM-VCC) have to be established.

The ATM-adaptation-layer-2 (AAL2) of an ATM-node is able to multiplex a plurality of AAL-connections into one dedicated ATM-virtual-channel-connection (ATM-VCC). Then the plurality of ATM-adaptation-layer-2 (AAL2) connections are multiplexed into a termination point (TP) of one ATM-virtual-channel-connection (ATM-VCC). For each ATM-adaptation-layer-2 (AAL-2) connection a traffic contract may be defined between the ATM-layer and the ATM-adaptation-layer-2.

The ATM-adadptation-layer-5 (AAL-5) can only establish one ATM-adaptation-layer-5 (AAL-5) connection within one ATM-virtual-channel-connection (ATM-VCC). Thus only one ATM-adadptation-layer-5 (AAL-5) connection can be assigned to the termination point (TP) of the ATM-virtual-channel-connection (ATM-VCC).

ATM-adaptation-layer (AAL) connections can only be established within one dedicated ATM-virtual-channel (ATM-VCC). The AAL-connection-admission-control (AAL-CAC) checks within each of the ATM-virtual-channel-connections (ATM-VCC), whether it can carry the ATM-adaptation-layer (AAL) connection. If the requested bandwidth for an ATM-adaptation-layer (AAL) connection is higher than the available bandwidth of one ATM-virtual-channel-connection (ATM-VCC), this ATM-virtual-channel-connection (ATM-VCC) cannot be used for this ATM-adaptation-layer (AAL) connection. The available bandwidth of that ATM-virtual channel-connection (ATM-VCC) is not used, and such fragmentation of the overall bandwidth occurs. The maximum bandwidth for an ATM-adaptation-layer (AAL) connection is the bandwidth of the largest fragment available in one of the plurality of ATM-virtual-channel-connections (ATM-VCC).

Another disadvantage of multiple ATM-virtual-channel-connections (ATM-VCC) is, that these ATM-virtual-channel-connections (ATM-VCC) have to be managed in ATM-cross connect nodes. The performance of an ATM-cross-connect can such be reduced by the management of the plurality of ATM-virtual-channel-connections (ATM-VCC).

The ATM standard provides one solution to reduce the management effort in an ATM-cross connection, which is to use an ATM-virtual-path-connection (ATM-VPC). An ATM-virtual-path-connection (ATM-VPC) can combine up to 65536 ATM-virtual-channel-connections (ATM-VCC). In between two ATM-nodes, ATM-virtual-channel-connections (ATM-VCC) within an ATM-virtual-path-connection (ATM-VPC) are not visible. Such, the ATM-cross connection has only to manage one ATM-virtual-path-connection (ATM-VPC) and not a plurality of ATM-virtual-channel-connections (ATM-VCC). ATM-adaptation-layer-2 (AAL2) connections can be established in one dedicated ATM-virtual-path-connection (ATM-VPC) by using the corresponding ATM-virtual-channel-connections (ATM-VCC) within the ATM-virtual-path-connection (ATM-VPC). The ATM-adaptation-layer-2 (AAL2) connections can use the overall bandwidth of the ATM-virtual-channel-connections (ATM-VCC) within the dedicated ATM-virtual-path-connection (ATM-VPC).

A disadvantage of this solution is that the ATM-virtual-path-connection (ATM-VPC) must be terminated in an ATM-adaptation-layer (AAL) device. It is not possible to terminate the ATM-virtual-path-connection (ATM-VPC) in an ATM cross-connect (or switch) device or to multiplex ATM-virtual-channel-connections (ATM-VCC) from an ATM-adaptation-layer 2 (AAL2) device and also from other sources to the same ATM-virtual-path-connection (ATM-VPC). The reason is that, if the ATM-virtual-path-connection (ATM-VPC) is terminated in an ATM cross-connect (or switch), the ATM-connection-admisson-control (ATM-CAC) must reserve resources for individual ATM-virtual-channel-connections (ATM-VCC) through the ATM cross-connect and then the total capacity for AAL2-connections is again fragmented. Also the number of ATM-virtual-path-identifiers (ATM-VPI) is limited by the ATM-standard. Such, only a limited amount of ATM-virtual-paths-connections (ATM-VPC) can be established.

Document WO 98 29984 A proposes a system, in which a virtual path group is defined for a specific client, which may comprise different virtual paths for different Qualities of Service required by the client. The size of the virtual paths adjusts dynamically based upon the utilization level of each virtual path. The size of each virtual group of virtual paths is dependent upon the terms and conditions within the service contract agreement between a client and the carrier. In addition, also the size of the virtual path groups may be adjusted dynamically based on utilization levels. The number and the size of virtual connections in each virtual path are limited by the size of the virtual path.

It is an object of the invention to provide a system for an easy management of a plurality of ATM-virtual-channel-connections (ATM-VCC) for ATM-adaptation-layer (AAL) connections, without fragmenting the reserved bandwidth and without using one dedicated ATM-virtual-path-connection (ATM-VPC).

It is another objective of the invention, to allow an easy management of a plurality of ATM-virtual-channel-connections (ATM-VCC) within an ATM-cross-connection.

A further objective of the invention is to multiplex ATM-virtual-channel-connections (ATM-VCCs) that carry a plurality of ATM-adaptation-layer-2 connections (AAL2) with ATM-virtual-channel-connections (ATM-VCC) that have connection-end-points in other ATM-adaptation-layer (AAL) devices (e.g. AAL5 device) in the same network element or in another network element into one ATM-virtual-path-connection (ATM-VPC), such that the capacity reserved for AAL2-connections is not fragmented by the ATM-virtual-channel-connections (ATM-VCC) carrying AAL2-connections.

According to the invention, the system presented in the introduction comprises in addition means for assigning the network resources reserved for the common channel group for a common use to the second connections without fragmenting the network resources to the first connections. By providing one common channel groups the management of the first connections within an ATM-cross-connection is very easy.

Moreover, the network resources for all first connections, which are preferably ATM-connections of the ATM-layer of an ATM node such as an ATM-virtual-channel-connection or an ATM-virtual-path-connection, are once reserved in common for the channel group, whereby the management overhead is reduced. This reservation is preferably achieved by an ATM-traffic-contract. By using the ATM-traffic contract, it is possible to define a service category for all ATM-connections within said channel group. Moreover, it is possible to define one set of traffic parameters for all ATM-connections of said channel group. In addition the quality of service parameters can be defined for all ATM-connections of said channel group jointly. also a list of channel identifiers, which can be ATM-virtual-channel-identifiers, can be defined to be used. An ATM-virtual path identifier for said channel group can be defined in the traffic contract as well.

Before the network resources are reserved by the ATM-traffic contract, an ATM-connection-admission-control checks whether enough network resources are available.

The fragmentation of the reserved network resources is prevented by using the commonly reserved network resources with all established second connections jointly. These second connections are preferably ATM-adaptation-layer connections of the ATM-adaptation-layer of an ATM node. The services above the ATM-adaptation layer request certain service categories such as a guarantied bitrate, or a certain Quality of Service parameter, or a maximum allowed bitrate. The available bandwidth for said second connections is the overall available bandwidth of all first connections within one channel group. An AAL-connection-admission-control preferably checks, whether the required network resources are available in said channel group. In case, the required network resources for said second connections are available, preferably an AAL-traffic-contract reserves the required network resources from said channel group. That assures, the AAL connection can provide the service above the adaptation layer with the required resources.

Because the network resources for the channel group are reserved during connection set up between two ATM-nodes, the network resources restrict the number of AAL-connections that can be established within one channel group. As each AAL-connection uses a different amount of the reserved network resources, it is not possible to determine the total number of ATM-connections that can be established.

It is possible, to connect ATM-nodes via ATM-cross-connections. Preferably the invention provides a system, where said channel group is also being routed via an ATM-cross-connection. The transparent routing via the ATM-cross-connection minimises the management overhead.

To increase the flexibility of the system, it is preferred that a plurality of ATM-virtual-channel-connections are multiplexed into one ATM-virtual-path-connection, where said ATM-virtual-channel-connections carry payload data from different ATM-adaptation-layer-connections.

To increase the flexibility of channel groups, it is possible that at least one of said channel groups is multiplexed with at least one ATM-virtual-channel-connection into one ATM-virtual-path in an ATM-cross-connection.

The distribution of the overall available network resources of one channel group to all second connections is achieved such that in an origin ATM-node, payload data of said second connections are being multiplexed over said commonly reserved network resources of said channel group by multiplexing means and that in a destination ATM-node said payload data are being demultiplexed from said channel group by demultiplexing means.

The invention is described on example of an embodiment in the drawings which all represent block diagrams:
- Fig. 1: state of the art with multiple ATM-virtual channels
- Fig. 2: channel groups according to the invention.

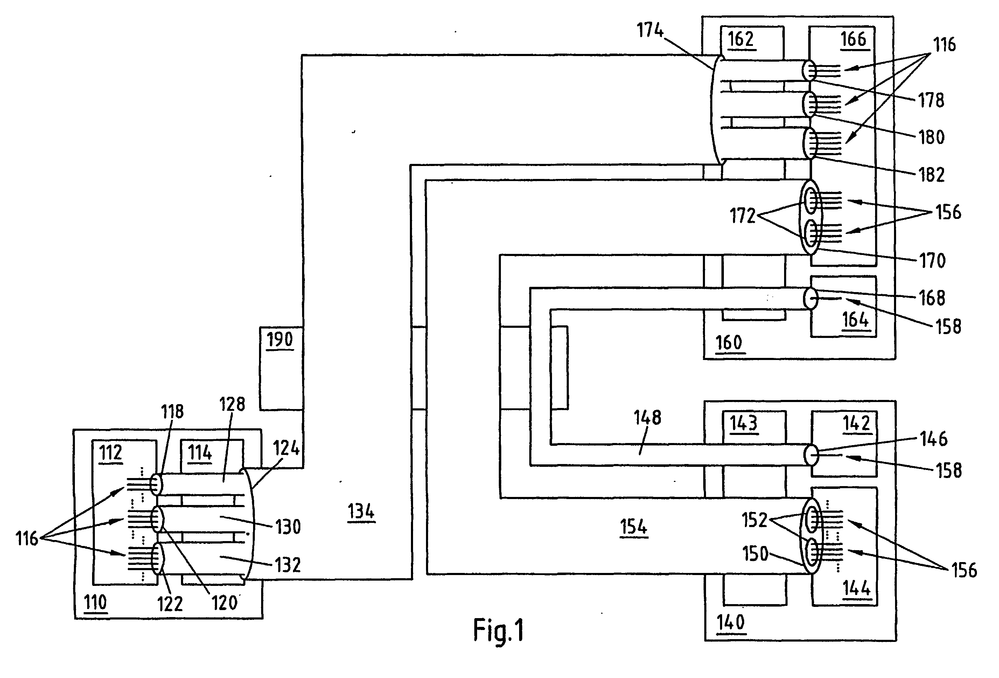

Fig. 1 shows an ATM-network according to the state of the art. In ATM-node 110 the functions of an ATM-layer 114 and the functions of an ATM-adaptation-layer-2 112 (AAL2) are realised. For communication over the ATM-network, ATM-adaptation-layer-2 (AAL2) connections 116 are being established. These connections 116 have their origin in ATM-adaptation-layer-2 112 (AAL2). ATM-virtual-channel-connections (VCC) 128, 130, 132 have their termination points 118, 120 and 122 within the ATM-adaptation-layer-2 112. To establish ATM-adaptation-layer-2 connections 116 between two ATM-nodes 110 and 160, the ATM-adaptation-layer-2 112 has to check, whether enough network resources are available. Therefore an ATM-adaptation-layer-2 connection admission control (AAL2-CAC) of ATM-adaptation-layer-2 112 checks the available network resources of ATM-virtual-channel-connections 128, 130 and 132. If one of these ATM-virtual-channel-connections 128, 130 and 132 provides enough network resources for an ATM-adaptation-layer-2 connection 116 these network resources are reserved by an ATM-traffic-contract.

The ATM-virtual-channel-connections (ATM-VCC) 128, 130 and 132 can be combined within one ATM-virtual-path-connection (ATM-VPC) 134. This ATM-virtual-path-connection (ATM-VPC) 134 has its termination point 124 in the ATM-layer 114. The ATM-virtual-channel-connections of one ATM-adaptation-layer 112 can be combined within one ATM-virtual-path-connection 134. One ATM-virtual-channel-connection 128, 130 or 132 can carry up to 248 ATM-adaptation-layer-2 connections 116.

The available network resources for AAL2-connections 116 are fragmented by the ATM-VCCs 128, 130, 132, because the ATM-VPC 134 is terminated in its termination point 124 in the ATM-layer 114 and the ATM-layer 114 must reserve ATM resources for individual ATM-VCCs 128, 130, 132.

Within ATM-node 140 the functions of the ATM-layer 143 as well as the functions of an ATM-adaptation-layer-2 144 and an ATM-adaptation-layers 142 are realised. For an ATM-adaptation-layer-5 it is not possible to multiplex a plurality of ATM-adaptation-layer-5 connections 158 within one ATM-virtual-channel-connection 148. Thus, only one ATM-adaptation-layer-5 connection 158 can be carried within one ATM-virtual-channel-connection 148. Because only one ATM-adaptation-layer-5 connection 158 can be carried within the ATM-virtual-channel-connection 148, no traffic contract has to be defined. The ATM-virtual-channel-connection 148 provides the ATM-adaptation-layer-5 connection 158 with traffic parameters such as quality of service. It is also not possible to multiplex ATM-virtual-channel-connection 148 with ATM-virtual-channel-connections 152, 150 into ATM-virtual-path-connection 154.

In case an ATM-virtual-path-connection 154 has its termination point 150 located within an ATM-adaptation-layer-2 144, a plurality of ATM-adaptation-layer-2 connections 156 can be freely multiplexed within the ATM-virtual-channel-connections 152 of the ATM-virtual-path-connection 154. The ATM-adaptation-layer-connection-admission-control checks, whether enough network resources are available within the ATM-virtual-path-connection 154. The capacity used by the ATM-virtual-channel-connections 152 can vary dynamically as new ATM-adaption-layer-connections are established and released and there is no need to reserve static capacity for each ATM-virtual-channel-connection 152. Applications above the ATM-adaptation-layer-2 144 require certain connection parameters. These connection parameters are provided by the ATM-adaptation-layer-2 connections 156. To ensure that these connection parameters are available any time, a traffic contract reserves network resources that provide the requested connection parameters.

Within the ATM-node 160 the connection end points of the connections 116, 156 and 158 are located. The ATM-connections 134, 154 and 148 are routed via the ATM-cross-connection 190.

The ATM-virtual-path-connection 134 has its termination point 174 in the ATM-layer 162 of the ATM-node 160. The ATM-virtual-channel-connections 128, 130 and 132 are multiplexed on to the ATM-adaptation-layer-2 166 by the ATM-layer 162. These ATM-virtual-channel-connections 128, 130 and 132 are terminated within the termination points 178, 180 and 182. From these termination points 178, 180 and 182 the ATM-adaptation-layer-2 connections 116 can be assigned to the corresponding applications. The ATM-virtual-path-connection 154 is terminated in the termination point 170, which is located in the ATM-adaptation-layer-2 166. The ATM-adaptation-layer-2 connections 156, which are located within the ATM-virtual-channel-connections 152, that are terminated in the termination point 172, can also be assigned to the corresponding applications by the ATM-adaptation-layer-2 166. Also the ATM-virtual-channel-connection 148 is terminated in the ATM-node 160. The termination point 168 of the ATM-virtual-channel-connection 148 is located within the ATM-adaptation-layer-5 146. From this termination point 168 the ATM-adaptation-layer-5 connection 158 is available for the ATM-adaptation-layer-5 164.

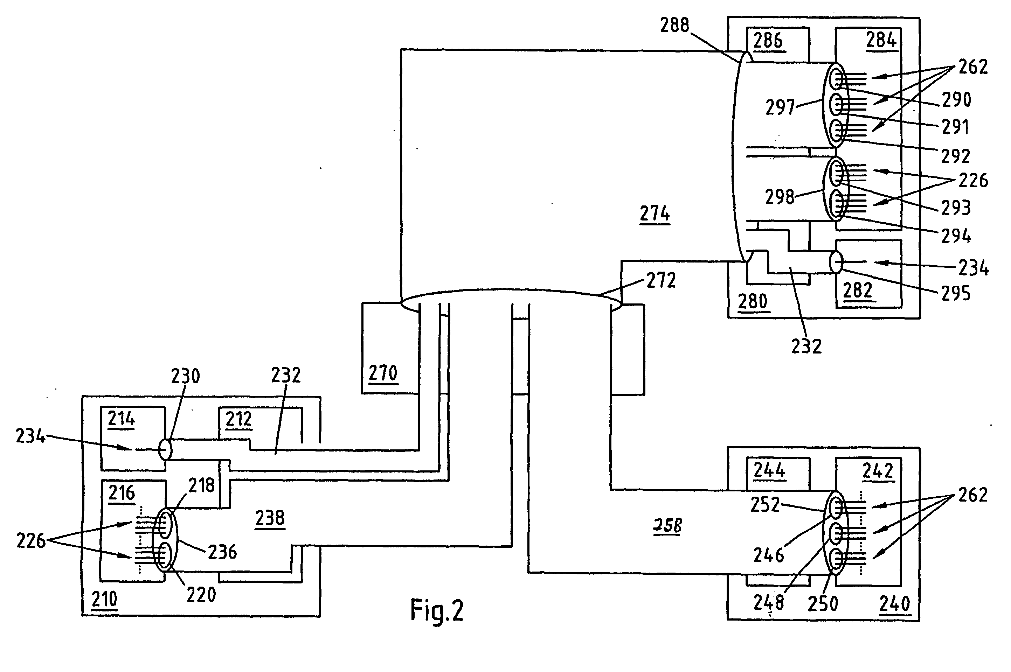

One possible embodiment of the invention is depicted in Fig. 2. Within the ATM-node 210 the functions of an ATM-layer 212, an ATM-adaptation-layer-5 214 as well an ATM-adaptation-layer-2 216 are realised. The payload data of the ATM-adaptation-layer-5 connection 234 is carried within the ATM-virtual-channel connection 232, which is terminated in the ATM-adaptation-layer-5 214 within the termination point 230. A plurality of ATM-adaptation-layer-2 connections 226 are established by the ATM-adaptation-layer-2 216. The payload data of these ATM-adaptation-layer-2 connections 226 are carried within the channel group 238. This channel group 238 is terminated in the termination point 218, which is located within the ATM-adaptation-layer-2 216. According to the invention, the ATM-virtual-channel-connections are multiplexed by the ATM-adaptation-layer 216 into the channel group 238. Each of the ATM-virtual-channel-connections can use dynamically any portion of the channel group capacity 238. The amount of bandwidth used by the ATM-virtual-channel-connections varies according to the establishment an release of ATM-adaptation-layer-connections 226. The ATM-adaptation-layer connection-admission-control checks that there is a channel group connection to the destination node and that enough capacity is provided.

The ATM-adaptation-layer 5 214, which is located in ATM node 210 has also an ATM-virtual-channel established. The virtual channel 232 carries the payload data from ATM-adaptation-layer 5 connection 234. The ATM-virtual-channel 232 is terminated in termination point 230.

Within ATM-node 240 a plurality of ATM-adaptation-layer-2 connections 262 are established by the ATM-adaptation-layer-2 242. The payload data of the ATM-adaptation-layer-2 connections 262 are carried by the ATM-virtual-channel-connections that are terminated in the termination points 246, 248 and 250. These ATM-virtual-channel-connections are carried within one channel group 258. The capacity of the channel group 258 is freely distributed over the ATM-virtual-channels. The channel group is terminated in termination point 252.

Within the ATM-cross-connection node 270 the channel group 238, the channel group 258 and the ATM-virtual-channel-connection 232 are multiplexed into one channel group 274, which is established between the termination point 272 within the ATM-node 270 and the termination point 288 of the ATM-node 280.

From the termination point 288 of the virtual path 274, which is located within the ATM-layer 286, the channel groups are multiplexed onto the termination points 297 and 298. The ATM-virtual-channel-connections which are located within the channel groups 238 and 258 are terminated in the termination points 290 to 294. The termination points 290 to 294 are located within the ATM-adaptation-layer-2 284. Within the ATM-adaptation-layer-2 284 the ATM-adaptation-layer-connections 262 and 226 are assigned to the corresponding applications.

Also the ATM-virtual-channel-connection 232, which is as well carried within the channel group 274 is multiplexed to its termination point 282. From the termination point 282, which is located in the ATM-adaptation-layer 5 282, the ATM-adaptation-layer connection 234 is assigned within the ATM-adaptation-layer-5 282 to the appropriate application.

## Claims

1. System for enhanced resource management for connections of an ATM-network comprising means for setting up at least two first connections between two ATM-nodes (210,240,280) and for reserving network resources for said at least two first connections, means (216,242) for setting up a plurality of second connections (226,262) within said at least two first connections where said first connections provide sufficient network resources for each second connection (226,262), respectively, and means (216,242) for grouping said first connections together into one common channel group (238,258) and for reserving network resources jointly for said channel group (238,258), **characterised by** means for assigning said network resources reserved for said common channel group (238,258) for a common use to said second connections (226,262) without fragmenting said network resources to said first connections.

2. System according to claim 1, **characterised in that,** said first connection is an ATM-connection, preferably an ATM-virtual-channel-connection ATM-VCC or an ATM-virtual-path-connection ATM-VPC.

3. System according to claim 1, **characterised in that** said means for reserving network resources are adopted to commonly reserve said network resources for said first connection by means of one ATM-traffic contract for said first connection within said channel group (238,258).

4. System according to claim 1, **characterised by** an ATM-connection-admission-control ATM-CAC for checking, whether said required amount of network resources for said first connection is available.

5. System according to claim 1, **characterised in that,** said second connections (226,262) are ATM-adaptation-layer-connections, preferably an ATM-adaptation-layer-2-, an ATM-adaptation-layer-1-, an ATM-adaptation-layer-3/4-, or an ATM-adaptation-layer-5-connection, said system further comprising means for multiplexing said ATM-adaptation-layer-connections (226,262) onto said first connection.

6. System according to claim 1, **characterised by** an ATM-connection-admission-control ATM-CAC for checking, whether said required amount of network resources for said second connections (226,262) is available in said channel group (238,258).

7. System according to claim 1, **characterised by** an ATM-adaptation-layer-connection-admission-control AAL-CAC for reserving said required amount of network resources for said second connections (226,262).

8. System according to claim 1, **characterised in that**, the number of said second connections (226,262) within said channel group (238,258) depends on the amount of network resources used by said second connections (226,262) and is restricted by the amount of commonly reserved network resources of said channel group (238,258).

9. System according to claim 1, **characterised by** means for routing said channel group (238,258) between two ATM-nodes (210,240,280) via an ATM-cross-connection (270).

10. System according to claim 1, **characterised by** means for multiplexing ATM-virtual-channel-connections ATM-VCC carrying payload data from different ATM-adaptation-layer-connections into one ATM-virtual-path-connection ATM-VPC, wherein said ATM-virtual-path-connection constitutes one of said first connections and wherein said ATM-adaptation-layer-connections belong to said second connections..

11. System according to claim 1, **characterised by** means (270) for multiplexing at least one of said channel groups (238,258) with at least one ATM-virtual-channel-connection (232) into one ATM-virtual-path ATM-VP (174).

12. System according to claim 1, **characterised in that** an origin ATM-node (210,240) comprises multiplexing means for multiplexing payload data of said second connections (226,262) over said commonly reserved network resources of said channel group (238,258) and that a destination ATM-node (280) comprises demultipexing means for demultiplexing said payload data from said channel group (238,258).

## Patentansprüche

1. System zur verbesserten Betriebsmittelverwaltung für Verbindungen eines ATM-Netzwerks, umfassend Mittel zum Herstellen von wenigstens zwei ersten Verbindungen zwischen zwei ATM-Knoten (210, 240, 280) und zum Reservieren von Netzbetriebsmitteln für die wenigstens zwei ersten Verbindungen, Mittel (216, 242) zum Herstellen einer Mehrzahl von zweiten Verbindungen (226, 262) innerhalb der wenigstens zwei ersten Verbindungen, wobei die ersten Verbindungen jeweils genügend Netzbetriebsmittel für jede zweite Verbindung (226, 262) bereitstellen, und Mittel (216, 242) zum Zusammenbündeln der ersten Verbindungen zu einer gemeinsamen Kanalgruppe (238, 258) und zum gemeinsamen Reservieren von Netzbetriebsmitteln für die Kanalgruppe (238, 258), **gekennzeichnet durch** Mittel zum Zuordnen der Netzbetriebsmittel, welche für die gemeinsame Kanalgruppe (238, 258) reserviert sind, für eine gemeinsame Verwendung zu den zweiten Verbindungen (226, 262) ohne Fragmentierung der Netzbetriebsmittel zu den ersten Verbindungen.

2. System nach Anspruch 1, **dadurch gekennzeichnet, dass** die erste Verbindung eine ATM-Verbindung und vorzugsweise eine virtuelle ATM-Kanalverbindung ATM-VKV oder eine virtuelle ATM-Pfadverbindung ATM-VPV ist.

3. System nach Anspruch 1, **dadurch gekennzeichnet, dass** die Mittel zum Reservieren von Netzbetriebsmitteln eingesetzt werden, um die Netzbetriebsmittel für die erste Verbindung mithilfe eines ATM-Traffic-Contracts für die erste Verbindung innerhalb der Kanalgruppe (238, 258) gemeinsam zu reservieren.

4. System nach Anspruch 1, **gekennzeichnet durch** eine ATM-Verbindungszugriffssteuerung ATM-VZS zum Prüfen, ob die erforderliche Menge von Netzbetriebsmitteln für die erste Verbindung verfügbar ist.

5. System nach Anspruch 1, **dadurch gekennzeichnet, dass** die zweiten Verbindungen (226, 262) ATM-Anpassungsschichtverbindungen sind, und zwar vorzugsweise eine ATM-Anpassungsschicht-2-, eine ATM-Anpassungsschicht-1-, eine ATM-Anpassungsschicht-3/4- oder eine ATM-Anpassungsschicht-5-Verbindung, wobei das System ferner Mittel zum Multiplexen der ATM-Anpassungsschichtverbindungen (226, 262) auf die erste Verbindung umfasst.

6. System nach Anspruch 1, **gekennzeichnet durch** eine ATM-Verbindungszugriffssteuerung ATM-VZS zum Prüfen, ob die erforderliche Menge von Netzbetriebsmitteln für die zweiten Verbindungen (226, 262) in der Kanalgruppe (238, 258) verfügbar ist.

7. System nach Anspruch 1, **gekennzeichnet durch** eine ATM-Anpassungsschicht-Verbindungszugriffssteuerung AAS-VZS zum Reservieren der erforderlichen Menge von Netzbetriebsmitteln für die zweiten Verbindungen (226, 262).

8. System nach Anspruch 1, **dadurch gekennzeichnet, dass** die Anzahl der zweiten Verbindungen (226, 262) innerhalb der Kanalgruppe (238, 258) von der Menge von Netzbetriebsmitteln, welche durch die zweiten Verbindungen (226, 262) verwendet werden, abhängt und durch die Menge von gemeinsam reservierten Netzbetriebsmitteln der Kanalgruppe (238, 258) beschränkt ist.

9. System nach Anspruch 1, **gekennzeichnet durch** Mittel zum Leiten der Kanalgruppe (238, 258) zwischen zwei ATM-Knoten (210, 240, 280) über eine ATM-Rangierung (270).

10. System nach Anspruch 1, **gekennzeichnet durch** Mittel zum Multiplexen von virtuellen ATM-Kanalverbindungen ATM-VKV, welche Nutzdaten von verschiedenen ATM-Anpassungsschichtverbindungen befördern, in eine virtuelle ATM-Pfadverbindung ATM-VPV, wobei die virtuelle ATM-Pfadverbindung eine der ersten Verbindungen bildet und wobei die ATM-Anpassungsschichtverbindungen zu den zweiten Verbindungen gehören.

11. System nach Anspruch 1, **gekennzeichnet durch** Mittel (270) zum Multiplexen wenigstens einer der Kanalgruppen (238, 258) mit wenigstens einer virtuellen ATM-Kanalverbindung (232) in einen virtuellen ATM-Pfad ATM-VP (174).

12. System nach Anspruch 1, **dadurch gekennzeichnet, dass** ein ATM-Ausgangsknoten (210, 240) Multiplexmittel zum Multiplexen von Nutzdaten der zweiten Verbindungen (226, 262) über die gemeinsam reservierten Netzbetriebsmittel der Kanalgruppe (238, 258) umfasst und dass ein ATM-Zielknoten (280) Demultiplexmittel zum Demultiplexen der Nutzdaten aus der Kanalgruppe (238, 258) umfasst.

## Revendications

1. Système pour la gestion de ressource évoluée pour des connexions d'un réseau ATM (mode de transfert asynchrone) comprenant des moyens pour l'établissement d'au moins deux premières connexions entre deux noeuds ATM (210, 240, 280) et pour la réservation de ressources réseau pour au moins lesdites deux premières connexions, des moyens (216, 242) pour établir une pluralité de secondes connexions (226, 262) à l'intérieur au moins desdites deux premières connexions où lesdites premières connexions fournissent des ressources de réseau suffisantes pour chaque seconde connexion (226; 262), respectivement et des moyens (216, 242) pour rassembler lesdites premières connexions dans un seul groupe de canaux commun (238, 258) et pour réserver des ressources de réseau conjointement pour ledit groupe de canal (238, 258) **caractérisé par** des moyens pour assigner lesdites ressources de réseau (238, 258) réservées pour un usage commun auxdites secondes connexions (226, 262) sans fragmentation desdites ressources de réseau auxdites premières connexions.

2. Système selon la revendication 1, **caractérisé en ce que** ladite première connexion est une connexion ATM de préférence une connexion de canal virtuel ATM-VCC et une connexion de conduit virtuel ATM-VPC.

3. Système selon la revendication 1, **caractérisé en ce que** lesdits moyens pour la réservation des ressources de réseau sont adoptés en commun pour réserver lesdites ressources de réseau pour ladite première connexion au moyen d'un contrat de trafic ATM pour ladite première connexion à l'intérieur dudit groupe de canal (238, 258).

4. Système selon la revendication 1, **caractérisé par** un contrôle d'admission de connexion ATM ATM-CAC pour vérifier si ladite quantité requise des ressources de réseau pour ladite première connexion est disponible.

5. Système selon la revendication 1, **caractérisé en ce que** lesdites secondes connexions (226, 262) sont des connexions de couche d'adaptation ATM de préférence une connexion 2 de couche d'adaptation ATM et une connexion 1 de couche d'adaptation ATM, ou une connexion 3/4 de couche d'adaptation ATM, ou une connexion 5 de couche d'adaptation ATM, ledit système comprenant en outre des moyens pour le multiplexage desdites connexions de couche d'adaptation ATM (226, 262) sur ladite première connexion.

6. Système selon la revendication 1, **caractérisé par** un contrôle d'admission de connexion ATM-CAC pour vérifier si ladite quantité requise de ressources de réseau pour lesdites secondes connexions (226, 262) est disponible dans ledit groupe de canal (238, 258).

7. Système selon la revendication 1, **caractérisé par** un contrôle d'admission de connexion AAL-CAC pour la réservation d'une quantité requise de ressources de réseau pour lesdites secondes connexions (226, 262).

8. Système selon la revendication 1, **caractérisé en ce que** le nombre desdites secondes connexions (226, 262) à l'intérieur du groupe de canal (238, 258) dépend de la quantité des ressources de réseau utilisées par lesdites secondes connexions (226, 262) et est restreinte par la quantité des ressources de réseau réservées dudit groupe de canal (238, 258).

9. Système selon la revendication 1, **caractérisé par** des moyens pour le routage dudit groupe de canal (238, 258) entre deux noeuds ATM (210, 240, 280) par des connexions croisées ATM (270).

10. Système selon la revendication 1, **caractérisé par** des moyens pour le multiplexage de connexions de canal virtuel ATM-VCC portant des données utiles depuis différentes connexions de couche d'adaptation ATM dans une connexion de conduit virtuel ATM-VPC, où ladite connexion de conduit virtuel ATM constitue l'une desdites premières connexions et où les connexions de couche d'adaptation ATM font partie desdites secondes connexions.

11. Système selon la revendication 1, **caractérisé par** des moyens (270) pour le multiplexage d'au moins l'un desdits groupes de canal (238, 258) avec au moins une connexion de canal virtuel ATM (232) dans un conduit virtuel ATM VP (174).

12. Système selon la revendication 1, **caractérisé en ce qu'**un noeud d'origine ATM (210, 240) comprend un moyen de multiplexage pour le multiplexage de données utiles desdites secondes connexions (226, 262) sur lesdites ressources de réseau réservées en commun dudit groupe de canal (238; 258) et **en ce qu'**un noeud ATM de destination (280) comprend des moyens pour démultiplexer lesdites données utiles dudit groupe de canal (238, 258).
